# EUROPEAN PATENT SPECIFICATION

(11) **EP 2 810 595 B1**
(45) Date of publication and mention of the grant of the patent: **18.07.2018**
(21) Application number: 14171332.1
(22) Date of filing: 05.06.2014
(51) Int. Cl.: A47L 15/42, A47L 15/00

(54) **Dishwashing machine with heating element**
Geschirrspülmaschine mit Heizelement
Machine à laver la vaisselle avec élément de chauffage

(30) Priority: 07.06.2013 SE 1350698
(43) Date of publication of application: 10.12.2014
(73) Proprietor: Gorenje d.d., 3320 Velenje (SI)
(72) Inventor: Persson, Thomas, 521 52 Floby (SE); Årlid, Christian, 531 52 Lidköping (SE)
(74) Representative: Zacco Sweden AB

(56) References cited:
- EP-A1- 0 898 928
- EP-A2- 2 474 261
- DE-A1- 3 635 778
- DE-A1- 19 951 838

## Description

### TECHNICAL FIELD

The invention concerns a dishwashing machine comprising a washing chamber where objects to be washed are contained during operation of the machine, a bottom surface forming a lower limitation of the washing chamber, a sump cup for collecting and holding washing water from the washing chamber, an arrangement for re-circulating washing water from the sump cup back into the washing chamber of the machine, and a heating element for heating re-circulating washing water.

### BACKGROUND

Dish washing machines are commonly designed to re-circulate process/washing water during operation of the machine and are commonly equipped with a heating element for heating the re-circulating water before it re-enters the washing chamber of the machine, typically via spray arms. Conventionally, the heating elements have been of the electric type, for instance because of their high heating capability (high heat transfer per surface area unit), which makes it possible to use relatively small heaters that can be placed in e.g. a pump house, as exemplified in e.g. EP0898928A1. Further examples of dish washing machines making use of electric heating elements are disclosed in DE19951838A1 and DE3635778A1.

For general energy-saving reasons there is an increasing interest for more energy efficient heaters. Such heaters typically need to be larger to heat the process water sufficiently and it is more difficult to find room for installing this type of heaters in the process water system. Various attempts have been made where a plurality of smaller heaters is used or where a larger heater is placed in the interior of the machine. Generally, systems with a plurality of heaters become complicated and heaters arranged in the interior of the machine, the washing chamber, might accumulate food debris etc. or damage plastic washing goods if they come in contact with the heater. EP2474261A2 discloses an example where a combination of an electric heater and a heat pump heater are placed on the bottom surface of the washing chamber.

There is thus a need for improvements in this field.

### SUMMARY OF THE INVENTION

An object of the present invention is to provide a dishwashing machine allowing for an energy efficient heating of re-circulating water. This object is achieved by the machine defined in claim 1.

The invention concerns a dishwashing machine comprising a washing chamber where objects to be washed are contained during operation of the machine, a bottom surface forming a lower limitation of the washing chamber, a sump cup for collecting and holding washing water from the washing chamber, an arrangement for re-circulating washing water from the sump cup back into the washing chamber of the machine, and a heating element for heating re-circulating washing water. In the inventive machine the heating element is configured to allow through flow of a heating medium, and the heating element is arranged in the sump cup.

The use of a heating element that is designed for through flow of a heating medium makes it possible to let the heating element form part of a heat exchange system that has the potential to form a more energy efficient system than when using an electrical heating element. In the inventive machine the heating medium gives off heat via the heating element to the process water collected in the sump cup. A heat source for heating the heating medium can be an external heat system based on e.g. solar heat, bedrock heat or a district heating system, or a heat pump system that is more or less included in the machine. In the latter case the heating element in the sump cup forms the condenser of the heat pump.

The inventive way of positioning the heating element in the sump cup allows larger and thus more efficient heating element to be used compared to placement in ducts and/or in connection to the re-circulation pump because the sump cup normally provides more space, or can at least more easily be adapted to provide more space. This is of particular importance for a heating element containing a flowing heating medium since such a heating element often requires a larger heat transfer surface than electrical heating elements for the same heating power (because of lower heat transfer per surface area unit). In contrast to e.g. pump houses and pipes, the sump cup can more easily be adapted to fit a particular heating element. The inventive heating element is also more cost effective than other solutions such as coaxial pipe heat exchangers.
Moreover, by positioning the heating element in the sump cup it becomes easy to avoid that food leftovers etc get stuck at/under/onto the heating element compared to positioning of the heating element inside the washing chamber because the washing water is normally filtered before or while entering the sump cup. Preferably, the machine comprises at least one filter for filtering recirculating process water, wherein said at least one filter is arranged such that recirculating water leaving the washing chamber is filtered prior to contacting the heating element.
Further, washing water is collected and held in the sump cup during operation of the machine and the heating element is thereby positioned below the water level during operation of the machine which facilitates an effective heat transfer and a reduced risk for overheating of the heating element.

The bottom surface of the washing chamber is provided with an opening and the sump cup is arranged below the bottom surface and in connection to the opening such as to allow washing water to flow from the washing chamber into the sump cup. The washing water thus leaves the washing chamber via the opening and the sump cup.

The heating element is arranged to form a substantially vertical cavity with at least one open end, wherein the heating element is positioned such that the at least one open end faces the opening in the bottom surface. The vertical cavity thus has an open upper end through which water can enter into the cavity. The heating element can be arranged with an open bottom end and/or with radial passages so that the water can flow out from the cavity via the open ends and/or the radial openings. The vertical cavity allows a filter of e.g. the common cylindrical and removable type to be fitted into the sump cup in a conventional way. The heating element will thus extend in the space delimited by the outer walls of such a filter and the inner walls of the sump cup. The heating element can thus be arranged along the inner walls of the sump cup which provides for an efficient use of the space of the sump cup. Further, it makes it possible to filter the water that passes through the opening in the bottom surface before it comes in contact with the heating element. Thereby, the risk of soiling the heating element is avoided.
The dishwashing machine may comprise an elongated filter member configured to filter washing water that passes from the washing chamber via the opening in the bottom opening into the sump cup. The filter member is adapted to be inserted through the opening in the bottom surface and be attached in a removable manner at the opening such as to at least partly protrude downwards inside the sump cup, wherein the heating element is arranged such as to circumferentially surround the filter member in the sump cup when the filter member is attached at the opening. By fitting the heating element around the filter member the space in the sump cup is efficiently used.

The heating element comprises a pipe that is arranged in a pattern that forms the substantially vertical cavity. Such a pipe-based design facilitates the through flow of the heating medium. A pipe is also easily adaptable to fit into the sump cup. The heating element is arranged such that washing water from the washing chamber is allowed to flow past the heating element and hence facilitate an efficient the heat transfer.

The pipe is arranged in a coil structure. Such a structure provides for a relatively easy and cost-efficient production. The coil structured pipe preferably extends circumferentially a plurality of rounds in the sump cup, preferably along the inner walls, thereby providing a large heat exchange surface such that the heat transfer between the heating medium and the water is efficient. A small distance between at least some of the pipe rounds (pipe "layers") in the coil allows water to pass out in a radial direction from the cavity inside the coil. The coil structure may be of cylindrical shape, conical shape or any other suitable shape forming the substantially vertical cavity. The heating element forms part of a heat exchange system through which the heating medium is intended to flow and take up energy/heat via a heat source and give off energy/heat via the heating element. The heat source may form part of the machine or be external. In both cases the heating element may form part of a closed system forming a closed loop through which the heating medium is intended to flow.
The heat exchange system may be a heat pump comprising an evaporator and a condenser, wherein the heating element forms the condenser. Normally, such a system comprises also a compressor and a release valve and forms a closed loop for the heating medium. The evaporator forms the heat source for the heating medium. The evaporator can form part of the machine and take its energy from e.g. the surrounding air.
An external heat source is suitable based on e.g. solar heat, bedrock heat or a district heating system. The heating element can be connected so that water (or another heating medium) heated by such an external heat source flows through the heating element. The same external heat source may used to heat e.g. room heating radiators in a building.
The sump cup preferably comprises at least one outlet for water to be re-circulated. The re-circulation outlet is preferably arranged such as to allow a sufficient heat transfer from the heating element to the washing water before the collected washing water is passed on via the re-circulation outlet.
The arrangement for re-circulating washing water may comprise pump means and flow ducts connecting the sump cup and the washing chamber via the pump means. The sump cup is connected to the flow ducts via the re-circulation outlet.

The sump cup preferably also comprises a drainage outlet arranged at the bottom of the sump cup. Thereby, water can be re-circulated or drained directly from the sump cup depending on the operation of the machine. The sump cup is preferably drained through the drainage outlet when the operation of the machine has finished. By arranging the drainage outlet in the bottom of the sump cup a complete drainage is facilitated.

According to one aspect of the invention the heating element is made of stainless steel or a resistant plastic material. Such materials are suitable for the rough environment in the sump cup.

The bottom surface may be inclined downwards towards the opening such as to facilitate transport of the washing water from the washing chamber to the sump cup.

The term "sump cup" refers to a container for collecting and holding washing water comprising wall(s) and a bottom forming the collecting space.

### BREIF DESCRIPTION OF THE DRAWINGS

The present invention will now be described in detail with reference to the figures, wherein:
- Figure 1: shows an embodiment of a dish washing machine according to the invention;
- Figure 2: shows the bottom part of the embodiment according to figure 1;
- Figure 3: shows the sump cup of the embodiment according to figure 1 and illustrates the heat exchange between the washing water and the heating element;
- Figure 4: shows the sump cup and a portion of the bottom part of the embodiment according to figure 1; and
- Figure 5: shows, in a cross-sectional view, the sump cup of the embodiment according to figure 1.

### DETAILED DESCRIPTION OF THE DRAWINGS

In the description of the invention given below reference is made to the following figures in which one embodiment is exemplified. The invention is however not limited to the embodiment shown in the figures, and the figures are simply to be seen as a way of illustrating one mode of the invention.

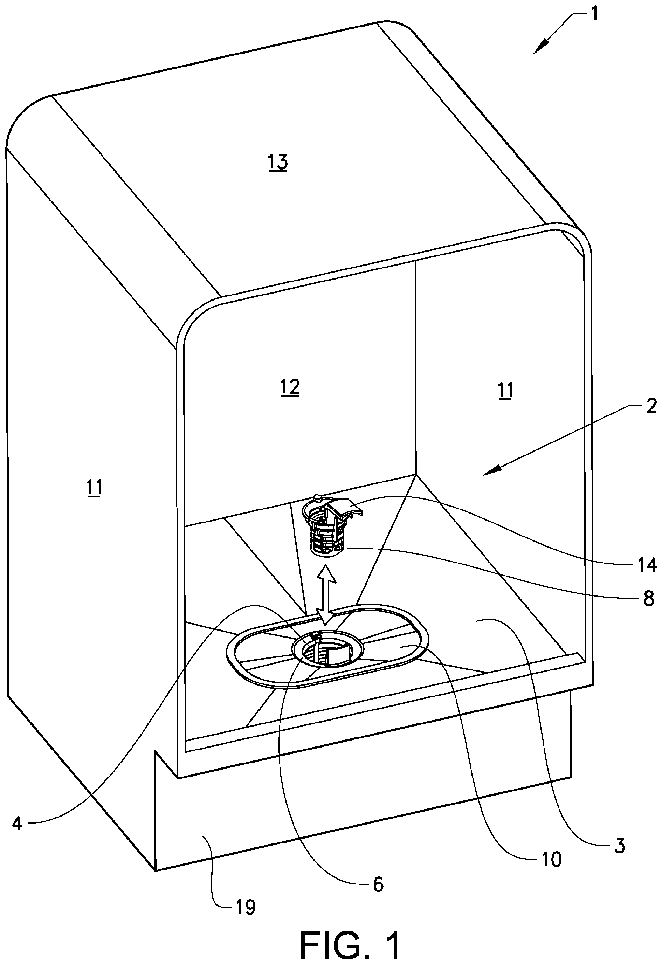

Figures 1-5 show an embodiment of the inventive dishwashing machine (1) comprising a heating element (5) arranged in the sump cup (4) of the dishwashing machine (1).

Figure 1 shows a front loaded dishwashing machine 1 comprising a washing chamber 2 where objects to be washed are contained during operation of the machine 1. A front door of the dishwashing machine is omitted from figure 1 for clarity reasons i.e. such that the washing chamber 2 is shown. The dishwashing machine 1 further comprises a bottom surface 3 forming a lower limitation of the washing chamber 2. The bottom surface 3 is provided with a circular opening 6 arranged roughly in the centre of the bottom surface 3. Two side walls 11, a rear wall 12, a top surface 13, the door (not shown) and the bottom surface 3 limits the washing chamber 2 of the dishwashing machine 1.

The machine 1 further comprises a sump cup 4 for collecting and holding washing water. The sump cup 4 being arranged below the bottom surface 3 in connection to the opening 6 such as to allow washing water to flow from the washing chamber 2 into the sump cup 4. The sump cup 4 has in this example a cylindrical shape with a bottom and with inner walls forming a circumferential limitation.

An elongated filter member 8, adapted to be inserted through the opening 6 in the bottom surface 3 and elongate downwards into the sump cup 4 when attached at the opening 6, is removed from the sump cup 4 in Figure 1. A handle 14 on the filter member 8 facilitates the removal and insertion into the sump cup 4.

The bottom surface 3 is inclined downwards towards the opening 6 such as to facilitate that washing water flows towards and into the sump cup 4 during operation of the machine 1. A flat sieve 10 that surrounds the opening 6 is arranged on a part of the bottom surface 3.

The bottom surface 3 of the washing chamber 2 also forms an upper limitation of a space 19 arranged below the washing chamber 2 in the washing machine 1. The sump cup 4 extends downwardly from the opening 6 in the bottom surface 3 such that the cylindrical body of the sump cup 4 is essentially located in the space below the bottom surface 3.

The dishwashing machine 1 also comprises an arrangement for re-circulating washing water from the sump cup 4 back into the washing chamber 2 of the machine 1, the arrangement comprising pump means and flow ducts (not shown) connecting the sump cup 4 to the washing chamber 2. The washing water is applied to the goods to be washed in the washing chamber 2 via spray arms (not shown). Pump means, flow ducts and spray arms are generally well known as such to a person skilled in the art. The space below the bottom surface 3 commonly accommodates the pump means.

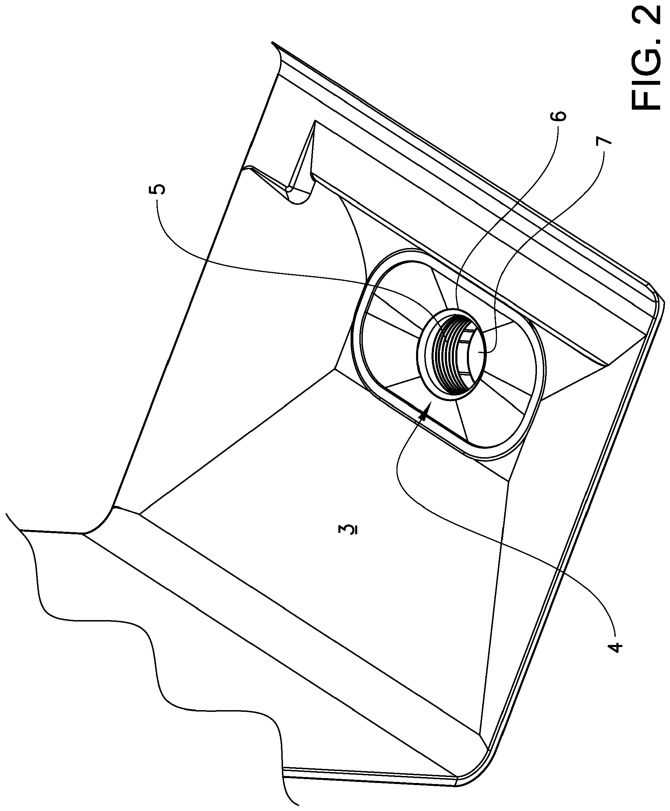

Figure 2 shows that a heating element 5 for heating re-circulating washing water is arranged in the sump cup 4. The heating element 5 is formed of a pipe arranged in a coiled helical structure inside of which a substantially vertical cavity 7 is formed. Both ends of the cavity 7 is open. The heating element 5 is positioned such that the vertical cavity 7 is open towards the opening 6 in the bottom surface 3 of the washing chamber 2, i.e. an upper open end of the cavity 7 faces the opening 6. The heating element 5 is concentrically arranged in relation to the opening 6 so that the cavity 7 and the opening 6 are vertically aligned.

The coiled heating element 5 is arranged substantially along the inner wall of the sump cup 4. The diameter of the coiled heating element 5 is adapted to the inner diameter of the sump cup 4 such that the vertical cavity 7 is formed in the centre of the sump cup 4 in which the heating element 5 is arranged. The vertical cavity 7 is suitable for receiving the filter member 8 shown in Figure 1.

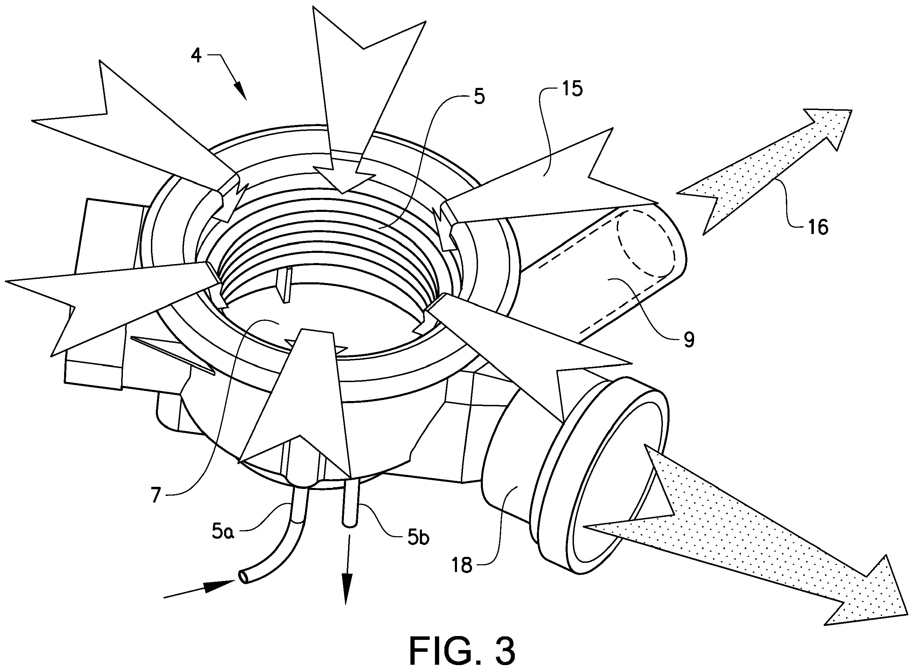

Figure 3 illustrates the heat exchange taking place between the heating element 5 and the washing water flowing into the sump cup 4 from the washing chamber 2. Cold water, indicated by arrows 15, flows from the washing chamber 2 into the sump cup 4, and is heated as it passes the heating element 5 in the sump cup 4, thereby being heated before being passed on from the sump cup 4, indicated by arrow 16, to the re-circulation arrangement (not shown) via a recirculation outlet 9.

The ends of the coiled pipe forming the heating element 5 form an outlet and an inlet 5a, 5b (see figure 3) allowing the heating medium to enter and exit the heating element 5. The outlet 5b and inlet 5a do not necessarily have to form true ends of the pipe since it is possible to extend the pipe and let it form a closed loop. However, in practice it is suitable to arrange the inlet and outlet pipe ends 5a, 5b such as to protrude from the sump cup 4 (see figure 3). In this example the ends 5a, 5b are arranged to extend downwards in an axial direction of the coil in parallel to each other. These ends 5a, 5b are connected to pipes or tubes (not shown) for further connection to a heat source (not shown) for allowing heating of the heating medium intended to flow through the pipe forming the heating element 5. As described above, the heating of the heating medium can be arranged in various ways.

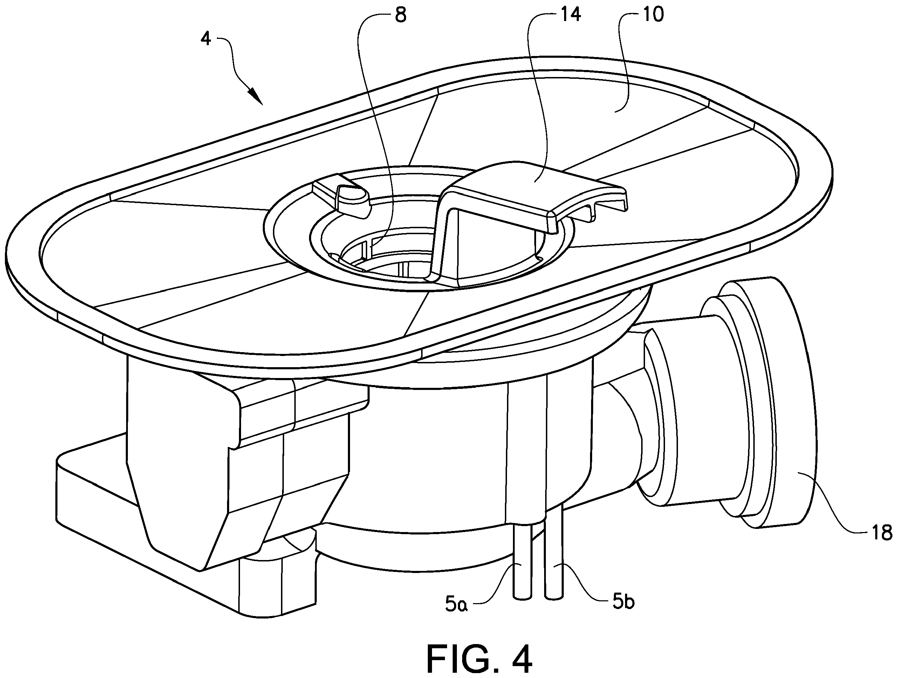

Figure 4 shows a further view of the sump cup 4 in which the elongated filter member 8 is arranged. The handle 14 extends out of the sump cup 4 such that the filter member 8 is graspable from inside the washing chamber 2. The filter member 8 is configured to filter washing water that passes from the washing chamber 2 via the opening 6 in the bottom surface 3 into the sump cup 4. The filter member is arranged such that it extends from the opening 6 in the bottom surface 3 into the sump cup 4, i.e. it protrudes in a downward direction into the vertical cavity of the coiled pipe.

A space is formed between the flat sieve 10 and the inclined bottom surface 3 that allows washing water to pass through the sieve 10 and flow towards the opening 6. Water flowing this way is thus filtered by the sieve 10.

The filter member 8 is centrally arranged in the sump cup 4 such that a ring-shaped entrance to the sum cup 4 is formed around the filter member 8 at the opening 6 and such that a tube-shaped space 17 is formed below the ring-shaped entrance in the sump cup 4 between the outer circumference of the filter member 8 and the inner walls of the sump cup 4. The heating element 5 is arranged in this tube-shaped space 17. Washing water flowing through the sieve 10 may enter the tube-spaced space 17 via the ring-shaped entrance.

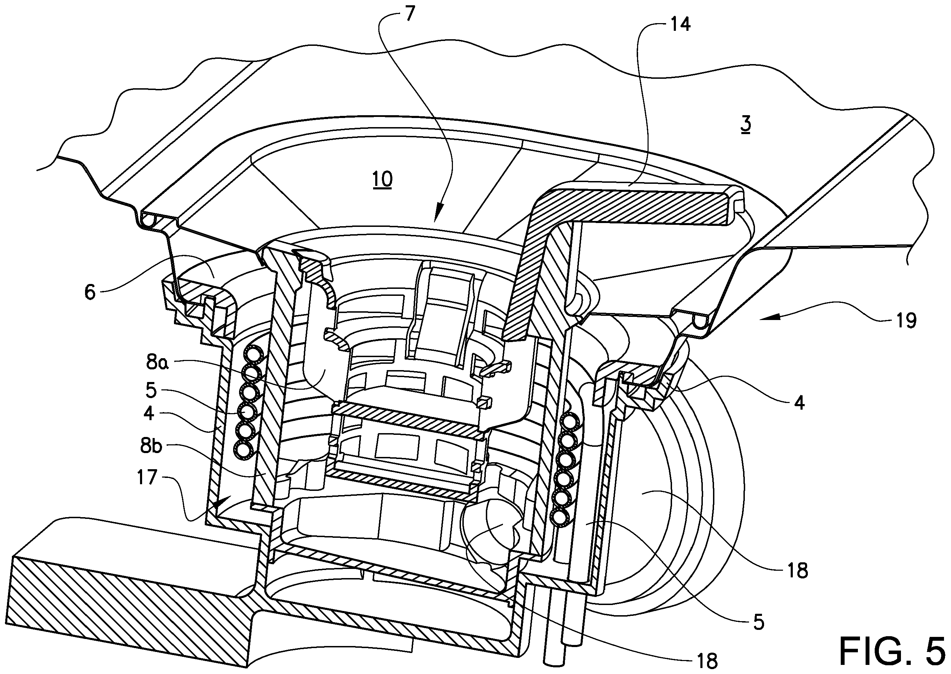

Figure 5 shows a cross-sectional view of the sump cup 4 with the filter member 8 arranged in place. The tube-shaped space 17 between the outer circumference of the filter member 8 and the inner walls of the sump cup 4 is also shown in Figure 5. The heating element 5 is arranged in this tube-shaped space 17, thereby encircling the filter member 8. Washing water entering the tube-shaped space 17 will have passed either the flat sieve 10, if entering via the ring-shaped entrance around the filter member 8 at the opening 6, or the filter member 8, if entering via the centre of the vertical cavity of the coiled pipe 5. The washing water will therefore be filtered before coming into contact with the heating element 5.

The re-circulation outlet 9 is arranged in the wall of the sump cup 4 at a distance from the bottom. The outlet 9 is fluidly connected to the arrangement for re-circulating washing water, the arrangement being located outside the perimeters of the sump cup 4.

During operation of the machine 1, the washing water is heated by the heating element 5 when passing the sump cup 4 prior to exiting the sump cup 4 via the outlet 9 onwards to the arrangement of flow ducts and pump means for re-circulation.

A drainage outlet 18 is arranged in the wall of the sump cup 4, adjacent the bottom, such that the sump cup 4 may be drained at the end of a washing operation.

The filter member 8 comprises in this case a coarse filter 8a and a fine filter 8b, seen in Figure 5. The fine filter 8b is arranged around the coarse filter 8a such that the fine filter 8b encloses the coarse filter 8a. The handle 14 is arranged upon the coarse filter 8a.

The heating medium can be water or other medium commonly used in heat exchangers and/or heat pumps.

The invention is not limited to the specific embodiment presented, but includes variations within the scope of the present claims.

For instance, the heating element does not necessarily have to extend circumferentially in the sump cup to form a vertical cavity, or to form a coiled pipe structure. Other shapes and structures are possible. However, a heating element in general shaped as a tube or similar with a vertical cavity can be relatively large but allow the use of a relatively small sump cup and still allow a filter to be inserted into the sump cup. This allows for efficient heat transfer and filtering. Further, a pipe provides for a large heat exchange surface that enhances the heat exchange. Although a pipe can be arranged in other patterns that, as a whole, forms a tube-shaped structure or similar, for instance by providing the pipe with a large number of bends, a coiled pipe structure is an effective way of providing the general shape.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Dishwashing machine (1) comprising
- a washing chamber (2) where objects to be washed are contained during operation of the machine (1),
- a bottom surface (3) forming a lower limitation of the washing chamber (2),
- a sump cup (4) for collecting and holding washing water from the washing chamber (2),
- an arrangement for re-circulating washing water from the sump cup (4) back into the washing chamber (2) of the machine (1), and
- a heating element (5) for heating re-circulating washing water,
- wherein
the heating element (5) is configured to contain a flowing heating medium and to allow through flow of the heating medium,
wherein the heating element (5) forms part of a heat exchange system through which the heating medium is intended to flow and take up energy/heat via a heat source and give off energy/heat via the heating element (5), **characterized in that** the heating element (5) is arranged in the sump cup (4), wherein the bottom surface (3) is provided with an opening (6) and wherein the sump cup (4) is arranged below the bottom surface (3) in connection to the opening (6) such as to allow washing water to flow from the washing chamber (2) into the sump cup (4), and wherein the heating element (5) is arranged to form a substantially vertical cavity (7) with at least one open end, and wherein the heating element (5) is positioned such that the at least one open end faces the opening (6) in the bottom surface (3), and
wherein the heating element (5) comprises a pipe that is configured to contain the flowing heating medium and to allow through flow of the heating medium and that is arranged in a pattern that forms the substantially vertical cavity (7), and
wherein the pipe is arranged in a coil structure.

2. Dishwashing machine (1) according to any of the above claims, wherein the machine (1) comprises an elongated filter member (8) configured to filter washing water that passes from the washing chamber (2) via the opening (6) in the bottom surface (3) into the sump cup (4), said filter member (8) being adapted to be inserted through the opening (6) in the bottom surface (3) and be attached in a removable manner at said opening (6) such as to at least partly protrude downwards inside the sump cup (4), wherein the heating element (5) is arranged such as to circumferentially surround the filter member (8) in the sump cup (4) when the filter member (8) is attached at the opening (6).

3. Dishwashing machine (1) according to any of the above claims, wherein the heat exchange system is a heat pump comprising an evaporator and a condenser, wherein the heating element (5) forms the condenser.

4. Dishwashing machine (1) according to any of the above claims, wherein the sump cup (4) comprises at least one outlet (9) for water to be re-circulated.

5. Dishwashing machine (1) according to any of the above claims, wherein the arrangement for re-circulating washing water comprises pump means and flow ducts connecting the sump cup (4) and the washing chamber (2) via the pump means.

6. Dishwashing machine (1) according to any of the above claims, wherein the sump cup (4) comprises a drainage outlet (18) arranged at the bottom of the sump cup (4).

7. Dishwashing machine (1) according to any of the above claims, wherein the heating element (5) is made of stainless steel or a plastic material.

8. Dishwashing machine (1) according to any of the above claims, wherein the bottom surface (3) is inclined downwards towards the opening (6).

## Patentansprüche

1. Geschirrspülmaschine (1) umfassend
- eine Waschkammer (2), in der während des Betriebs der Maschine (1) zu waschende Gegenstände enthalten sind,
- eine eine untere Begrenzung der Waschkammer (2) bildende Bodenfläche (3),
- einen Sumpftopf (4) zum Aufnehmen und Halten des Waschwassers aus der Waschkammer (2),
- eine Anordnung zum Rückführen des Waschwassers aus dem Sumpftopf (4) zurück in die Waschkammer (2) der Maschine (1) und
- ein Heizelement (5) zum Heizen von rückgeführtem Waschwasser,
wobei das Heizelement (5) dazu ausgelegt ist, ein fließendes Heizmedium zu enthalten, und einen Durchfluss des Heizmediums zu ermöglichen,
wobei das Heizelement (5) Teil eines Wärmetauschersystems bildet, durch welches das Heizmedium fließen und Energie/Wärme über eine Heizquelle aufnehmen und Energie/Wärme über das Heizelement (5) abgeben soll, **dadurch gekennzeichnet, dass** das Heizelement (5) im Sumpftopf (4) angeordnet ist,
wobei die Bodenfläche (3) mit einer Öffnung (6) versehen ist, und wobei der Sumpftopf (4) unterhalb der Bodenfläche (3) in Verbindung zur Öffnung (6) angeordnet ist, um das Fließen des Waschwassers aus der Waschkammer (2) in den Sumpftopf (4) zu ermöglichen, und
wobei das Heizelement (5) angeordnet ist, um einen im Wesentlichen vertikalen Hohlraum (7) mit mindestens einem offenen Ende zu bilden, und wobei das Heizelement (5) so angebracht ist, dass das mindestens eine offene Ende der Öffnung (6) in der Bodenfläche (3) zugewandt ist, und
wobei das Heizelement (5) ein Rohr umfasst, das dazu ausgelegt ist, das fließende Heizmedium zu enthalten, und den Durchfluss des Heizmediums zu ermöglichen, und das in einem den im Wesentlichen vertikalen Hohlraum (7) bildenden Muster angeordnet ist, und
wobei das Rohr in einer Spulenstruktur angeordnet ist.

2. Geschirrspülmaschine (1) nach einem der vorgehenden Ansprüche, wobei die Maschine (1) ein längliches Filterglied (8) umfasst, das dazu ausgelegt ist, das aus der Waschkammer (2) über die Öffnung (6) in der Bodenfläche (3) in den Sumpftopf (4) eintretende Waschwasser zu filtrieren, wobei das Filterglied (8) so angepasst ist, dass es durch die Öffnung (6) in der Bodenfläche (3) eingeführt und in einer abnehmbaren Weise an der Öffnung (6) befestigt wird, um innerhalb des Sumpftopfes (4) wenigstens teilweise nach unten zu ragen, wobei das Heizelement (5) so angeordnet ist, dass es umfangsmäßig das Filterglied (8) im Sumpftopf (4) umgibt, wenn das Filterglied (8) an der Öffnung (6) befestigt ist.

3. Geschirrspülmaschine (1) nach einem der vorgehenden Ansprüche, wobei das Wärmetauschersystem eine einen Verdampfer und einen Kondensator umfassende Wärmepumpe ist, wobei das Heizelement (5) den Kondensator bildet.

4. Geschirrspülmaschine (1) nach einem der vorgehenden Ansprüche, wobei der Sumpftopf (4) zumindest einen Auslass (9) für rückzuführendes Wasser umfasst.

5. Geschirrspülmaschine (1) nach einem der vorgehenden Ansprüche, wobei die Anordnung für das Rückführen von Waschwasser Pumpenmittel und Flusskanäle umfasst, welche den Sumpftopf (4) und die Waschkammer (2) über die Pumpenmittel verbinden.

6. Geschirrspülmaschine (1) nach einem der vorgehenden Ansprüche, wobei der Sumpftopf (4) eine am Boden des Sumpftopfes (4) angeordnete Abflussöffnung (18) umfasst.

7. Geschirrspülmaschine (1) nach einem der vorgehenden Ansprüche, wobei das Heizelement (5) aus rostfreiem Stahl oder einem Kunststoffmaterial hergestellt ist.

8. Geschirrspülmaschine (1) nach einem der vorgehenden Ansprüche, wobei die Bodenfläche (3) nach unten in Richtung der Öffnung (6) geneigt ist.

## Revendications

1. Machine à laver la vaisselle (1) comprenant
- une chambre de lavage (2) où sont contenus des objets à laver pendant le fonctionnement de la machine (1),
- une surface inférieure (3) formant une limitation inférieure de la chambre de lavage (2),
- une coupelle de puisard (4) pour recueillir et retenir l'eau de lavage provenant de la chambre de lavage (2),
- un dispositif de recirculation de l'eau de lavage provenant de la coupelle de puisard (4) de retour dans la chambre de lavage (2) de la machine (1), et
- un élément chauffant (5) pour chauffer l'eau de lavage recyclée,
dans laquelle l'élément chauffant (5) est configuré pour contenir un fluide caloporteur liquide et pour permettre l'écoulement du fluide caloporteur,
dans laquelle l'élément chauffant (5) fait partie d'un système d'échange de chaleur par lequel le fluide caloporteur est destiné à circuler et absorber de l'énergie / chaleur par une source de chaleur et dégager de l'énergie / chauffer par l'élément chauffant (5), **caractérisée en ce que** l'élément chauffant (5) est disposé dans la coupelle de puisard (4),
dans laquelle la surface inférieure (3) est pourvue d'une ouverture (6) et dans laquelle la coupelle de puisard (4) est disposée sous la surface inférieure (3) en relation avec l'ouverture (6) de manière à permettre à l'eau de lavage de s'écouler de la chambre de lavage (2) dans la coupelle de puisard (4), et dans laquelle l'élément chauffant (5) est agencé pour former une cavité essentiellement verticale (7) avec au moins une extrémité ouverte, et dans lequel l'élément chauffant (5) est positionné de telle manière qu'au moins une extrémité ouverte fait face à l'ouverture (6) dans la surface inférieure (3), et
dans laquelle l'élément chauffant (5) comprend un tuyau qui est configuré pour contenir le fluide caloporteur liquide et pour permettre l'écoulement du fluide caloporteur, et qui est agencé selon un motif qui forme la cavité essentiellement verticale (7), et
dans laquelle le tuyau est disposé dans une structure en serpentin.

2. Machine à laver la vaisselle (1) selon l'une quelconque des revendications précédentes, dans laquelle la machine (1) comprend un élément filtrant allongé (8) configuré pour filtrer l'eau de lavage qui sort de la chambre de lavage (2) par l'ouverture (6) dans la surface inférieure (3) dans la coupelle de puisard (4), ledit élément filtrant (8) étant adapté pour être inséré à travers l'ouverture (6) dans la surface inférieure (3) et être fixé de manière amovible au niveau de ladite ouverture (6) au moins partiellement en saillie à l'intérieur de la coupelle de puisard (4), l'élément chauffant (5) étant agencé de façon à entourer circonférentiellement l'élément filtrant (8) dans la coupelle de puisard (4) lorsque l'élément filtrant (8) est attaché à l'ouverture (6).

3. Machine à laver la vaisselle (1) selon l'une quelconque des revendications précédentes, dans laquelle le système d'échange de chaleur est une pompe à chaleur comprenant un évaporateur et un condenseur, l'élément chauffant (5) formant le condenseur.

4. Machine à laver la vaisselle (1) selon l'une quelconque des revendications précédentes, dans laquelle la coupelle de puisard (4) comprend au moins une sortie (9) pour que l'eau soit remise en circulation.

5. Machine à laver la vaisselle (1) selon l'une quelconque des revendications précédentes, dans laquelle le dispositif de recirculation de l'eau de lavage comprend des moyens de pompage et des conduits d'écoulement reliant la coupelle de puisard (4) et la chambre de lavage (2) par les moyens de pompage.

6. Machine à laver la vaisselle (1) selon l'une quelconque des revendications précédentes, dans laquelle la coupelle de puisard (4) comprend une sortie de drainage (18) agencée au fond de la coupelle de puisard (4).

7. Machine à laver la vaisselle (1) selon l'une quelconque des revendications précédentes, dans laquelle l'élément chauffant (5) est en acier inoxydable ou en matière plastique.

8. Machine à laver la vaisselle (1) selon l'une quelconque des revendications précédentes, dans laquelle la surface inférieure (3) est inclinée vers le bas en direction de l'ouverture (6).
